# EUROPEAN PATENT SPECIFICATION

(11) **EP 4 180 584 B1**
(45) Date of publication and mention of the grant of the patent: **25.09.2024**
(21) Application number: 22773392.0
(22) Date of filing: 29.04.2022
(51) Int. Cl.: E01C 19/26, E01C 19/28, E01C 19/40

(54) **SLOPE FINISHING ATTACHMENT AND WORK MACHINE**
BÖSCHUNGSTRIMMUNGSAUFSATZ UND ARBEITSMASCHINE
ACCESSOIRE DE FINITION DE PENTE ET ENGIN DE CHANTIER

(30) Priority: 26.09.2021 CN 202111131849
(43) Date of publication of application: 17.05.2023
(73) Proprietor: Sany Heavy Machinery Limited, Kunshan, Jiangsu 215300 (CN)
(72) Inventor: CHEN, Hao, Kunshan Jiangsu 215300 (CN); ZHANG, Yunlong, Kunshan Jiangsu 215300 (CN); CHENG, Youfa, Kunshan Jiangsu 215300 (CN)
(74) Representative: Murgitroyd & Company
(86) International application number: PCT/CN2022/090225
(87) International publication number: WO 2023/045334

(56) References cited:
- CN-A- 111 877 423
- CN-A- 112 554 210
- CN-A- 112 554 210
- CN-A- 112 761 205
- CN-A- 112 761 205
- CN-U- 202 809 462
- CN-U- 209 368 918
- CN-U- 210 827 635
- DE-A1- 3 611 191
- JP-U- S50 150 904

## Description

### TECHNICAL FIELD

The present application relates to the technical field of working machines, in particular, to a slope trimming attachment and a working machine.

### BACKGROUND

At present, manpower or a slope trimmer is usually used to trim the slope surface during road construction, the slope surface can be the side slope of the foundation pit or the road surface with a certain slope. Using manpower to trim the slope surface can ensure the construction quality to a certain extent, but there are problems of time-consuming, labor-intensive and high cost. However, using the slope trimmer to trim the slope requires investment in equipment costs, but compared with manpower operation, the construction efficiency has been greatly improved.

In the related art, a slope trimming device is proposed, and the slope trimming device trims the slope surface by means of the switching operation of cutting and roller compaction. When switching between cutting and roller compaction operations, it is necessary to readjust the position and posture of the work tool, which affects the construction efficiency to a certain extent and is not conducive to ensuring construction quality.

CN112554210A discloses a a foundation pit slope trimming device. The foundation pit slope trimming device includes an excavator body, a movable arm, a head rod, a first hydraulic cylinder, a second hydraulic cylinder and a third hydraulic cylinder, the movable arm is hinged to one end of the excavator body, the head rod is hinged to one end of the movable arm, the first hydraulic cylinder is hingedto one end of the excavator body, and the output end of the first hydraulic cylinder is hinged with the movable arm; and the second hydraulic cylinder is hinged to the top of the movable arm, the output end of the second hydraulic cylinder is hinged with the head rod, and the third hydraulic cylinder is hinged to the upper end of the head rod through a shaft pin. A rotating mechanism can be mounted and dismounted through the head rod and a connecting rod, the rotating mechanism and an excavator bucket of an excavator are replaced, the use cost is reduced, trimming is conducted through machinery instead of manpower, the labor intensity can be greatly reduced, waste of labor force is reduced, the working efficiency is improved, the angle of a trimming mechanism is adjusted through the rotating mechanism, thus the trimming angle of a side slope can be accurately controlled, and the attractiveness of trimming is improved.

CN111877423A discloses a roadbed slope leveling device for an excavator and a construction method of a roadbed slope leveling device. The slope leveling device is connected to the end of a bucket rodof the excavator and includes a control mechanism, a supporting connecting mechanism, a vibrating cutting mechanism and a dustproof mechanism, the vibrating cutting mechanism is connected to the endof the bucket rod of the excavator through the supporting connecting mechanism, and the control mechanism and the dustproof mechanism ate arranged on the vibrating cutting mechanism; the vibrating cutting mechanism includes side face plates and further includes an upper face plate, a lower face plate, a cutting plate and a vibrator which are arranged on the inner sides of the side face plates,the front sides of the upper face plate and the lower face plate are mutually hinged, the rear sides of the upper face plate and the lower face plate are connected through movable supporting rods, thecutting plate is arranged on the lower face plate, and the vibrator is arranged on the lower face plate; and the control mechanism is electrically connected with the vibrator and the movable supporting rods. The vibrating cutting mechanism is arranged to be matched with the control mechanism to realize automatic slope leveling construction and simultaneously complete operation of cutting and tamping, the slope angle is consistent, and the soil mass compaction effect is good; and the roadbed slope leveling device for the excavator and the construction method of the roadbed slope leveling device have the advantages of high slope leveling quality, high construction efficiency, low labor intensity and low construction cost.

CN112761205A discloses a slope flattening device. The slope flattening device includes a mounting rod mounted at the head of a crawler and a flattening mechanism mounted on the mounting rod, wherein the mounting rod is used for being in butt joint with the flattening mechanism, and the deflection angle of the flattening mechanism is adjusted through a motor; the flattening mechanism includes a U-shaped plate with a downward opening, a dovetail groove is formed in a top plate of the U-shaped plate, a bottom plate is arranged below the U-shaped plate, and pointed sawteeth are arranged on the front end face of the bottom plate; the bottom plate is hung on the U-shaped plate through two hanging plates; a sliding rod is transversely arranged in the U-shaped plate, a spherical head is arranged at the left end of the sliding rod, and the right end of the sliding rod is connected to a right vertical plate of the U-shaped plate through a spring; and a vibration disc is further arranged between the hanging plates and a left vertical plate of the U-shaped plate and connected with a second rotating motor, and a plurality of protruding strips capable of impacting the spherical head are arranged on the end face, making contact with the spherical head, of the vibration disc. The slope flattening device is simple in structure, convenient to demount and suitable for flattening and repairing slopes with different gradients.

JP S50150904U discloses a slope flattening device.

### SUMMARY

The present application provides a slope trimming attachment and a working machine, which are used to solve the problem that the existing slope trimming device has low construction efficiency and is not conducive to ensuring construction quality.

The present application provides a slope trimming attachment, including: a base, a first cutting device, a leveling mechanism, and a turning mechanism; the first cutting device and the leveling mechanism are arranged on the turning mechanism; the turning mechanism is rotatably arranged on the base, and the turning mechanism is configured to be able to adjust an angle of a cutting surface of the first cutting device relative to the slope surface and an angle of a leveling surface of the leveling mechanism relative to the slope surface through rotation, the turning mechanism is arranged on at least one of two ends of the base in a first direction; the turning mechanism is rotatable relative to the base along an axis in a second direction; where the first direction is along a length direction of the base, and the second direction is along a width direction of the base;
the turning mechanism includes a turning plate assembly and a drive assembly;
the turning plate assembly includes a turning plate and a connecting plate; and
one end of the connecting plate is rotatably connected to the base, and the other end of the connecting plate is rotatably connected to one end of the turning plate; the first cutting device and the leveling mechanism are installed on the turning plate; the drive assembly is connected between the base and the turning plate;
where the drive assembly is configured to adjust an angular position of the connecting plate relative to the base and an angular position of the turning plate relative to the connecting plate.

According to a slope trimming attachment provided by the present application, the first cutting device and the leveling mechanism are detachably connected to the turning mechanism respectively, and the cutting surface of the first cutting device and the leveling surface of the leveling mechanism have the same orientation; or, the first cutting device and the leveling mechanism are adjustably arranged on the turning mechanism respectively, and an inclined angle of at least one of the cutting surface of the first cutting device and the leveling surface of the leveling mechanism relative to the turning mechanism is adjustable.

According to a slope trimming attachment provided by the present application, the first cutting device includes a first blade arranged on at least one of two ends of the turning mechanism in the second direction.

According to a slope trimming attachment provided by the present application, the drive assembly includes a first telescopic drive mechanism and a second telescopic drive mechanism; one end of the first telescopic drive mechanism is rotatably connected to a first position of the base, one end of the second telescopic drive mechanism is rotatably connected to a second position of the base, and the other end of the first telescopic drive mechanism is rotatably connected to a third position of the turning plate, and the other end of the second telescopic drive mechanism is rotatably connected to a fourth position of the turning plate; wherein the first position is higher than the second position, and the third position is farther from the connecting plate than the fourth position.

According to a slope trimming attachment provided by the present application, the base includes a bottom plate and a connecting portion; the turning mechanism is rotatably arranged on the bottom plate; the connecting portion is installed on the bottom plate, and the connecting portion is used to connect to a movable working machine body.

According to a slope trimming attachment provided by the present application, two ends of the base in the first direction are respectively provided with the turning mechanism, and the connecting portion is arranged in the middle of the base; and/or, the connecting portion is provided with a first hinge point and a second hinge point, and the first hinge point and the second hinge point are arranged at intervals along the second direction.

According to a slope trimming attachment provided by the present application, the base further includes a support base installed on the bottom plate; the support base is configured to install a drive assembly which drives the turning mechanism to rotate.

According to a slope trimming attachment provided by the present application, the leveling mechanism includes a vibration mechanism and a tamping plate; an output end of the vibration mechanism is connected to a first surface of the tamping plate away from the slope surface, and a second surface of the tamper plate close to the slope surface is the leveling surface; the output end of the vibration mechanism is configured to vibrate back and forth along a direction perpendicular to the first surface.

According to a slope trimming attachment provided by the present application, further including: a second cutting device; the second cutting device includes a second blade; the second blade is arranged on at least one of two ends of the base in the second direction.

The present application also provides a working machine, including a movable work machine body, and the above slope trimming attachment, the slope trimming attachment is installed on the working machine body.

The working machine body according to the present application includes a boom and a third telescopic drive mechanism; an execution end of the boom is hinged with a first hinge point arranged on the base of the slope trimming attachment; one end of the third telescopic drive mechanism is hinged with the boom, and the other end of the third telescopic drive mechanism is hinged with a second hinge point arranged on the base of the slope trimming attachment.

A slope trimming attachment and a working machine are provided in the present application, by rotatably arranging the turning mechanism on the base, and arranging the first cutting device and the leveling mechanism on the turning mechanism, the angle of the cutting surface and the leveling surface of the leveling mechanism relative to the slope surface can be adjusted through the rotation of the turning mechanism, so that when the first cutting device performs the cutting operation on the slope surface, the leveling mechanism can also perform the leveling and compaction operation on the slope surface synchronously, so as to realize the trimming operation of the slope surface. Therefore, the slope trimming attachment provided by the present application is not only convenient to operate, but also realizes the simultaneous execution of cutting, leveling and compacting operations on the slope surface, improves the construction efficiency of the slope surface trim, and thereby ensuring construction quality.

### BRIEF DESCRIPTION OF DRAWINGS

In order to illustrate the technical solutions in the present application or the prior art more clearly, the following briefly introduces the accompanying drawings that are used in the description of the embodiments or the prior art. Obviously, the drawings in the following description are some embodiments of the application, for those of ordinary skill in the art, other drawings can also be obtained according to these drawings without any creative effort.
FIG.1 is a schematic diagram of slope trimming attachment provided in an embodiment of the present application;
FIG.2 is a schematic diagram of slope trimming attachment provided in an embodiment of the present application;
FIG.3 is a schematic diagram of a working machine provided in an embodiment of the present application.

Reference numbers are as following:
1: slope trimming attachment; 11: base; 12: first cutting device; 13: leveling mechanism; 14: turning mechanism; 110: connecting portion; 111: bottom plate; 112: support base; 130: vibration mechanism; 131: tamping plate; 141: turning plate assembly; 142: drive assembly; 401: turning plate; 402: connecting plate; 411: first telescopic drive mechanism; 15: second cutting device; 2: walking mechanism; 412: second telescopic drive mechanism; 3: slewing mechanism; 4: boom; 5: third telescopic drive mechanism; 6: on-board system; 121: first blade; 151: second blade.

### DETAILED DESCRIPTIONS

In order to make the purpose, technical solutions and advantages of the present application clearer, the technical solutions in the present application will be described below with reference to the accompanying drawings in the present application.

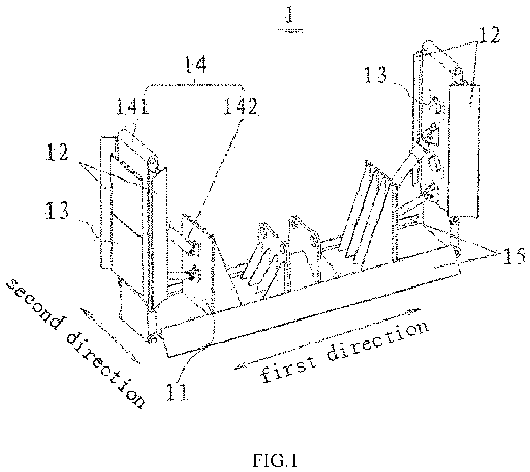

The following describes a slope trimming attachment and a working machine of the present application with reference to FIGS. 1-3.

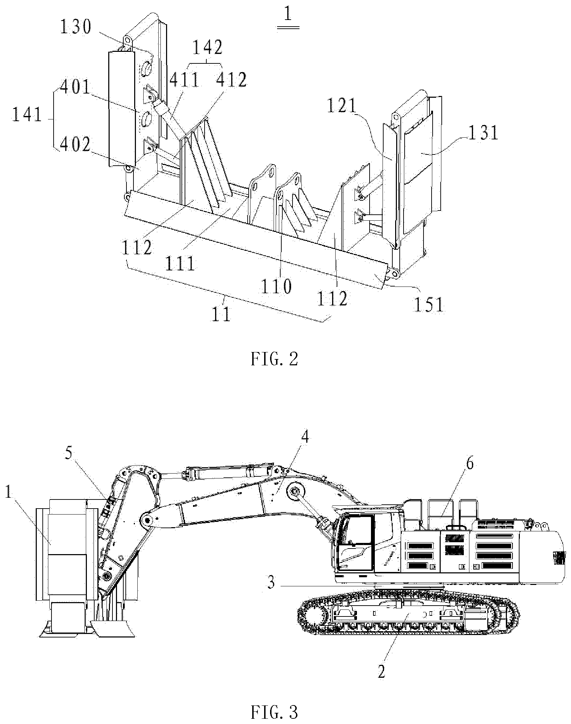

As shown in FIG. 1 and FIG. 2, the present embodiment provides a slope trimming attachment. The slope trimming attachment 1 includes: a base 11, a first cutting device 12, a leveling mechanism 13 and a turning mechanism 14. The first cutting device 12 and the leveling mechanism 13 are arranged on the turning mechanism14; the turning mechanism 14 is rotatably arranged on the base 11, and an angle of the cutting surface of the first cutting device 12 relative to the slope surface and an angle of the leveling surface of the leveling mechanism 13 relative to the slope surface can be adjusted through rotating of the turning mechanism 14, so that the cutting surface of the first cutting device 12 and the leveling mechanism 13 have a suitable trimming angle relative to the slope surface to be trimmed.

Specifically, in the present embodiment, the turning mechanism 14 is rotatably arranged on the base 11, and the first cutting device 12 and the leveling mechanism 13 are arranged on the turning mechanism 14, the angle of the cutting surface of the first cutting device 12 and the leveling surface of the leveling mechanism 13 relative to the slope surface can be adjusted synchronously by the turning mechanism 14, so that when the first cutting device 12 performs the cutting operation on the slope surface, the leveling mechanism 13 can also perform the leveling and compaction operation on the slope surface synchronously, so as to realize the trimming of the slope surface.

Therefore, the present application is not only convenient to operate, but also realizes the simultaneous execution of cutting, leveling and compacting operations on the slope surface, improves the construction efficiency of the slope surface trimming, and thereby ensuring the construction quality.

It should be pointed out here that the first cutting device 12 and the leveling mechanism 13 shown in the present embodiment are arranged on the turning mechanism 14, which can be understood as there are one or more turning mechanisms 14, and each turning mechanism is provided with the first cutting device 12 and the leveling mechanism 13, so that the turning mechanism14 can synchronously adjust the angle of the cutting surface of the first cutting device 12 and the leveling surface of the leveling mechanism 13 relative to the slope surface, so that when the cutting surface cuts the slope surface, the leveling surface can compact the slope surface. In a specific embodiment, the first cutting device 12 and the leveling mechanism 13 can be arranged on the opposite side of the turning mechanism 14 along the second direction, or a plurality of first cutting devices 12 can be arranged, and the plurality of first cutting devices 12 can be arranged on the opposite side of the turning mechanism 14 along the second direction. The leveling mechanism 13 is arranged in the middle of the turning mechanism 14, one or more of the leveling mechanisms 13 can be arranged in the middle position.

At the same time, the first cutting device 12 and the leveling mechanism 13 shown in this embodiment are arranged on the turning mechanism 14. It can also be understood that, in the case where a plurality of turning mechanisms 14 are arranged to be adjacent, the first cutting device 12 is arranged on one of the turning mechanisms, a leveling mechanism 13 is arranged on the other turning mechanism, so that through two different turning mechanisms, the angle of the cutting surface of the first cutting device 12 relative to the slope surface and the angle of the leveling surface of the leveling mechanism 13 relative to the slope surface can be adjusted respectively.

Obviously, the first cutting device12 and the leveling mechanism13 have other arrangements on the turning mechanism14, which are not listed here.

Furthermore, in the present embodiment, the first cutting device 12 and the leveling mechanism 13 are detachably connected to the turning mechanism 14 respectively in the form of bolt connection or multiple pin connections, so as to ensure the cutting surface of the first cutting device 12 and the leveling surface of the leveling mechanism 13 have the same orientation when installed on the turning mechanism 14, and are both used to face the slope surface to be trimmed. Since the turning mechanism14 can rotate relative to the base 11, and the first cutting device 12 and the leveling mechanism 13 are respectively arranged on the turning mechanism 14, with the rotating of the turning mechanism 14, the inclined angle of the cutting surface of the first cutting device12 and the leveling surface of the leveling mechanism13 relative to the horizontal surface also changes accordingly. In this way, the rotating angle of the turning mechanism 14 can be controlled based on the inclined angle of the slope surface in the present embodiment, so that the cutting surface of the first cutting device 12 cuts the soil at a suitable angle and the leveling mechanism 13 compacts the slope surface at a suitable angle, so that the slope surface can be cut at a suitable angle. trim.

At the same time, in the present embodiment, the first cutting device 12 and the leveling mechanism 13 can also be adjusted separately on the turning mechanism 14, and the inclined angle of at least one of the cutting surface of the first cutting device 12 and the leveling surface of the leveling mechanism 13 relative to the turning mechanism can be adjusted.

Here, in the present embodiment, the first cutting device 12 and the leveling mechanism 13 can be respectively installed on the turning mechanism 14 through an angle adjustment bracket known in the art, so that the inclined angle of the cutting surface of the first cutting device 12 and the leveling surface of the leveling mechanism 13 relative to the turning mechanism are both adjustable. Thus, in practical applications, the positions of the first cutting device 12 and the leveling mechanism 13 relative to the slope surface can initially be adjusted based on the turning mechanism 14 in the embodiment, and then the inclined angle of the cutting surface of the first cutting device 12 and the leveling surface of the leveling mechanism 13 relative to the slope surface are finely adjusted respectively based on angle adjustment bracket in order to ensure the accuracy of the slope surface trimming.

It should be pointed out here that the first cutting device 12 described in this embodiment cannot automatically cut the slope surface, but only the slope trimming attachment moves relative to the slope surface when the cutting surface of the first cutting device 12 is adjusted to an appropriate angular position, the first cutting device12 can realize the cutting and soil removal of the slope surface. Here, the movement of the slope trimming attachment can be driven manually or by a working machine. The first cutting device 12 may be a surface blade, a bucket, a fork-shaped blade, or a rake-shaped blade or the like known in the art, which is not specifically limited here.

At the same time, the turning mechanism 14 shown in this embodiment may be a manual adjustment bracket known in the art, or an angle adjustment mechanism driven by a telescopic drive mechanism or a rotary drive mechanism, which is not specifically limited here, as long as the turning mechanism14 can synchronously adjust the angles of the cutting surface of the first cutting device 12 and the leveling surface of the leveling mechanism 13 relative to the slope surface. One or more of the turning mechanisms 14 shown in this embodiment may be provided. In the case where a plurality of turning mechanisms 14 are arranged, the corresponding rotating axes of at least two turning mechanisms 14 are at a predetermined included angle when rotating, the predetermined included angle is 0°-90°.

In addition, the leveling mechanism 13 shown in the embodiment has a leveling surface, and the leveling surface may be a roller surface or a plate surface. In the case where the leveling surface is the roller surface, the leveling mechanism 13 can realize the compaction and leveling of the slope surface based on the rolling contact between the roller surface and the slope surface; and in the case where the leveling surface is the plate surface, based on the high-frequency vibration of the plate surface relative to the slope surface, the leveling mechanism 13 can realize the compaction and leveling of the slope surface.

Optionally, in order to facilitate trimming of the slope surfaces on both sides of the working machine in the advancing direction, the turning mechanism 14 shown in the embodiment is arranged on at least one of the two ends of the base 11 in the first direction; the turning mechanism 14 is rotatable relative to the base 11 along the axis in the second direction; the first direction is perpendicular to the second direction. The first direction is along the length direction of the base 11, and the second direction is along the width direction of the base 11.

Specifically, when the turning mechanism 14 is arranged to be one in the embodiment, the turning mechanism 14 is arranged at the left end or the right end of the base 11 along the length direction of the base 11.

As shown in FIG. 1 and FIG. 2, when multiple turning mechanisms 14 are arranged, the multiple turning mechanisms 14 are arranged at both ends of the base 11 along the length direction of the base 11. FIGS. 1 and 2 show that a turning mechanisms 14 is respectively arranged at both ends of the base 1. Since each turning mechanism 14 is provided with a first cutting device 12 and a leveling mechanism 13. The slope surfaces on both sides of the foundation pit can be trimmed at the same time when the working machine drives the slope trimming attachment 1 to advance along the extension direction of the foundation pit. In the case that the slopes of the slope surfaces on both sides of the foundation pit are different, the turning mechanisms 14 on both ends of the base 11 can be individually controlled to meet the trimming requirements for different slope surfaces.

Furthermore, the first cutting device 12 shown in the embodiment includes a first blade 121, and the first blade 121 is arranged on at least one of the two ends of the turning mechanism 14 in the second direction.

As shown in FIG. 1 and FIG. 2, there are two first blades 121 in the embodiment, the two first blades 121 are respectively arranged on opposite sides of the turning mechanism 14 along the second direction, and the leveling mechanism 13 is arranged between the first blades 121 on both sides.

It should be pointed out here that the first cutting device 12 shown in the embodiment may also include other forms of cutting structures, for example, the cutting structures are fork-shaped shovels or rake-shaped shovels, etc., which are not specifically limited here.

As shown in FIGS. 1 and 2, the turning mechanism 14 in the embodiment includes a turning plate assembly 141 and a drive assembly 142; one end of the turning plate assembly 141 is rotatably connected to the base11; the drive assembly 142 is connected between the base 11 and the turning plate assembly 141; the first cutting device 12 and the leveling mechanism 13 are installed on the turning plate assembly 141 .

In the embodiment, the turning plate assembly 141 can be driven to rotate relative to the base 11 by the drive assembly 142, so that the first cutting device 12 and the leveling mechanism 13 are synchronously suitable for trimming the slope surface.

The drive assembly 142 shown in the embodiment may include a telescopic driving mechanism or a rotating driving mechanism, for example, the telescopic driving mechanism may be a cylinder or hydraulic cylinder known in the art, and the rotating driving mechanism may be a hydraulic motor or a servo motor.

In a specific embodiment, the turning plate assembly 141 includes a turning plate 401 and a connecting plate 402; one end of the connecting plate 402 is rotatably connected to the base 11 through a first pin along the second direction, and the other end of the connecting plate 402 is rotatably connected to one end of the turning plate 401 through a first pin along the second direction; the first cutting device 12 and the leveling mechanism13 are installed on the turning plate 401; the drive assembly142 is connected between the base 11 and the turning plate 401; in order to ensure the trimming effect on the slope surface, the first cutting device 12 is provided with two first blade 121, the two first blades 121 are respectively arranged on opposite sides of the turning plate 401 along the second direction, and at least one leveling mechanism 13 is arranged and installed in the middle of the turning plate 401 .

Here, the drive assembly 142 shown in the embodiment is arranged to be able to adjust the angular position of the connecting plate 402 relative to the base 11 and the angular position of the turning plate 401 relative to the connecting plate 402, that is, by adjusting the angular position of the connecting plate 402 relative to the base 11, the angle of the turning plate 401 can be adjusted. The rotating angle of the turning plate 401 is adjusted based on the position of the lower end (the end is connected to the connecting plate 402), so that there is a suitable distance and a suitable angle between the turning plate 401 and the slope surface to be trimmed. Specifically, the drive assembly 142 can drive the lower end of the turning plate 401 to a certain position close to the inside of the base11 to adjust the turning plate 401 to a proper angle; or, the drive assembly 142 can drive the lower end of the turning plate 401 to a certain position away from the outside of the base11 to adjust the turning plate 401 to a proper angle; or, the drive assembly 142 is used to drive the turning plate 401 to move relative to the base 11 along the first direction.

The drive assembly 142 shown in the embodiment includes a first telescopic drive mechanism 411 and a second telescopic drive mechanism 412; one end of the first telescopic drive mechanism 411( one of the fixed end and the driving end) and one end of the second telescopic drive mechanism 412( one of the fixed end and the driving end) are rotatably connected to the base 11, the other end of the first telescopic drive mechanism 411(the other end of the fixed end and the driving end), and the other end of the second telescopic drive mechanism 412(the other end of the fixed end and the driving end) are rotatably connected to the turning plate 401; the angular position of the connecting plate 402 relative to the base 11 and the angular position of the turning plate 401 relative to the connecting plate 402 can be adjusted through the first telescopic drive mechanism 411 and the second telescopic drive mechanism412, so that the first cutting device12 and the leveling mechanism13 on the turning plate 401 are in a suitable position and the appropriate angle to trim the slope surface.

In a specific embodiment, one end of the first telescopic drive mechanism 411 is rotatably connected to the first position of the base 11, one end of the second telescopic drive mechanism 412 is rotatably connected to the second position of the base 11, and the other end of the first telescopic drive mechanism 411 is rotatably connected to the third position of the turning plate 401. The other end of the second telescopic drive mechanism 412 is rotationally connected to the fourth position of the turning plate 401; the first position is higher than the second position, and the third position is farther from the connecting plate 402 than the fourth position.

Here, in order to ensure the cutting operation effect, both the first telescopic drive mechanism 411 and the second telescopic drive mechanism 412 shown in the embodiment are preferably hydraulic cylinders, which not only ensures that the first telescopic drive mechanism 411 and the second telescopic drive mechanism 412 have sufficient driving force, but also realizes the driving functions of the first telescopic drive mechanism 411 and the second telescopic drive mechanism 412 by using the hydraulic oil source on the working machine.

In practice, the slope surface shown in the embodiment can be understood as an inclined surface with an acute angle. Based on the configuration of the turning plate assembly 141 and the drive assembly 142, the protrusion extent of the telescopic end of the first telescopic drive mechanism 411 can be controlled to be greater than that of the telescopic end of the second telescopic drive mechanism 412 in the embodiment, the upper end of the flap 401 can be controlled to turn outward when the lower end of the turning plate 401 is at a certain position away from the outer side of the base11, so that the cutting surface of the first cutting device 12 is inclined downward, the turning plate 121 of the turning plate 401 can cut the inclined surface, and the leveling mechanism 13 on the turning plate 401 performs synchronous leveling on the inclined surface. At the same time, the telescopic end of the first telescopic drive mechanism 411 can be controlled to extend in the embodiment, and the telescopic end of the second telescopic drive mechanism 412 to retract, so that the upper end of the flap 401 can be controlled to turn outward and the lower end of the turning plate 401 is at a certain position close to the inner side of the base 11, so that the cutting surface of the first cutting device 12 is inclined downward, and the inclined surface can be cut and leveled at the same time.

The slope surface shown in the embodiment can also be understood as the top surface of the tunnel with an obtuse angle. During tunnel construction, the turning plate 401 can be controlled to rotate toward the inner side of base 11 through the extension and retraction of the first telescopic drive mechanism 411 and the second telescopic drive mechanism 412, so that the cutting surface of first cutting device 12 is inclined upward, and a first blade 121 on turning plate 401 can cut the top surface of the tunnel, and the leveling mechanism 13 of turning plate401 can synchronously compact and level the top surface of the tunnel.

In addition, the slope surface shown in the embodiment can also be understood as a vertical wall with an inclined angle of 90°. When trimming the vertical wall, the extension and retraction of the first telescopic drive mechanism 411 and the second telescopic drive mechanism 412 can be optimally configured so that the turning plate 401 translates toward the outside of the base 11 along the first direction, and maintains a vertical state during translation, so as to facilitate simultaneous cutting, leveling and compaction of the vertical wall.

As shown in FIG. 1 and FIG. 2, the base 11 shown in the embodiment includes a bottom plate 111 and a connecting portion 110; the turning mechanism 14 is rotatably arranged on the bottom plate 111; the connecting portion 110 is used to connect to a working machine body which can move.

As shown in FIG. 1 and FIG. 2, in order to ensure the balance and stability of the slope trimming attachment during operation, both ends of the base 11 in the first direction are respectively provided with a turning mechanism 14, and the connecting portion 110 shown in the embodiment is arranged in the middle of base11 along the first direction, that is, between the turning mechanism14 at both ends of base11.

At the same time, in order to facilitate the attitude control of the base 11, the connecting portion 110 is provided with a first hinge point and a second hinge point, and the first hinge point and the second hinge point are arranged at intervals along the second direction in the embodiment,. Thus, in practical application, the hooking structure on the working machine body can be hinged to one of the first hinge point and the second hinge point, and the telescopic end of the telescopic drive mechanism on the working machine body can be hinged to the other one of the first hinge point and the second hinge point in the embodiment, so that the inclined angle of the base11 can be controlled by adjusting the telescopic amount of the telescopic drive mechanism.

Furthermore, the base 11 shown in the embodiment further includes a support base 112; the support base 112 is installed on the upper surface of the bottom plate 111, and the support base 112 is configured to install a drive assembly 142 that drives the turning mechanism 14 to rotate. Specifically, one end of the turning plate assembly 141 is rotatably connected to the bottom plate 111, and the drive assembly 142 is connected between the support base 112 and the turning plate assembly 141.

Here, since the support base 112 is the main load-bearing component of the drive assembly 142, in order to ensure the mechanical strength of the support base 112, the support base 112 shown in the embodiment includes a vertical plate and a stiffening plate, the bottom of the vertical plate is connected to the bottom plate 111, and one side of the stiffening plate is connected to one side of the vertical plate facing away from the turning plate assembly 141, and the other side of the stiffening plate is connected to the bottom plate 111, and there are a plurality of stiffening plates, which are arranged at intervals along the second direction. The first position and the second position shown in the above-mentioned embodiment are arranged on the side of the vertical plate facing the turning plate assembly 141 along the height direction of the base 11.

As shown in FIG. 1 and FIG. 2, the leveling mechanism 13 shown in the embodiment includes a vibration mechanism 130 and a tamping plate 131; the output end of the vibration mechanism 130 is connected to the first surface of the tamping plate 131 facing away from the slope surface, and the second surface of the tamping plate 131 facing the slope surface is used for leveling and compacting the slope surface; the output end of the vibration mechanism 130 can vibrate back and forth along the direction perpendicular to the second surface.

Specifically, the vibration mechanism 130 shown in the embodiment is preferably a hydraulic high frequency vibrator known in the art. The vibration mechanism 130 shown in the embodiment is arranged on the turning plate 401 shown in the above embodiment, and the tamping plate 131 is arranged on the side of the turning plate 401 facing the slope surface.

Furthermore, a plurality of leveling mechanisms 13 shown in the embodiment may be arranged, the plurality of leveling mechanisms 13 are arranged along the extending direction of the turning plate 401 away from the connecting plate 402, and the leveling surfaces of the plurality of leveling mechanisms 13 are flush, that is, the plurality of leveling mechanisms 13 corresponding to the second surface of tamping plate 131 are flush. In order to ensure the leveling effect on the slope surface and reduce the resonance generated during operation, the multiple leveling mechanisms 13 can be controlled to operate alternately in sequence, or the multiple leveling mechanisms 13 can be controlled to operate synchronously, but the vibration mechanism 130 corresponding to each leveling mechanism 13 should be ensured to vibrate at different frequencies.

Preferably, the slope trimming attachment 1 shown in the embodiment is further provided with a second cutting device 15, and the second cutting device 15 includes a second blade 151; the second blade 151 is arranged on at least one of the two ends of the base 11 in the second direction.

As shown in FIG. 1 and FIG. 2, there are two second blades 151, and the two second blades 151 are respectively arranged on opposite sides of the bottom plate 111 corresponding to the base 11 along the second direction. In this way, when the working machine walks along the foundation pit, the second blade 151 move relative to the pit bottom of the foundation pit since the working machine is connected to the base 11,, thereby realizing the trim of the pit bottom.

It should be noted here that the second cutting device 15 shown in the embodiment may also include other forms of cutting structures, for example, the cutting structures are fork-shaped shovels or rake-shaped shovels, etc., which are not specifically limited herein.

Preferably, the present embodiment also provides a working machine, which includes a movable working machine body and the above-mentioned slope trimming attachment 1, the slope trimming attachment1 is installed on the working machine body. In the embodiment, the working machine body may be the main structure of an excavator or a bulldozer, and the slope trimming attachment1 may be installed instead of the bucket of the excavator or bulldozer.

Specifically, since the working machine shown in the embodiment includes the slope trimming attachment 1 shown in the foregoing embodiment, the embodiment adopts all the technical solutions of all the foregoing embodiments, and therefore at least has the technical solutions of the foregoing embodiments. All the beneficial effects will not be repeated here.

As shown in FIG.3, the working machine body shown in the embodiment includes a boom 4 and a third telescopic drive mechanism 5; the execution end of boom 4 is hinged with the first hinge point arranged on the base11 of the slope trimming attachment 1; one end of the third telescopic drive mechanism 5 is hinged with the boom 4, the other end of the third telescopic drive mechanism5 is hinged with the second hinge point arranged on the base11 of the slope trimming attachment 1.

Here, in the present embodiment, the head end of the boom 4 can be installed on a fixed platform or a walking platform. When the working machine body is a carrying platform based on an excavator, the working machine body further includes a walking mechanism 2 and a slewing mechanism 3; the slewing mechanism 3 is arranged on the walking mechanism 2; the head end of the boom 4 is arranged on the slewing mechanism 3. The walking mechanism 2 shown in this embodiment is preferably a crawler-type walking mechanism. In order to facilitate the driving operation of the working machine, the slewing mechanism 3 is also provided with an on-board system 6 in the embodiment.

As shown in FIG. 3, the boom 4 shown in the embodiment includes a swing arm, a swing arm cylinder, a stick and a stick cylinder; one end of the swing arm and one end of the swing arm cylinder are respectively hinged with the slewing mechanism3, and the other end of the swing arm cylinder is hinged with the middle of the swing arm, the other end of the swing arm is hinged with the first end of the stick, the second end of the stick is hinged with the first hinge point; one end of the stick cylinder is hinged with the middle of the swing arm, and the other end of the stick cylinder is hinged with the third end of the stick. At the same time, one end of the third telescopic drive mechanism 5 is hinged with the third end of the stick, and the other end of the third telescopic drive mechanism 5 is hinged with the second hinge point. The third telescopic drive mechanism 5 is preferably an oil cylinder known in the art.

In the present embodiment, the angle of the swing arm rotation relative to the slewing mechanism 3 can be controlled by the swing arm cylinder, the angle of the swing arm rotation relative to the swing arm can be controlled by the stick cylinder, and the angle of the slope trimming attachment 1 rotation relative to the stick can also be controlled by the third telescopic drive mechanism 5.

Furthermore, since the boom 4 also rotates relative to the walking mechanism 2 under the control of the slewing mechanism 3, the position and attitude of the slope repairing accessory 1 can be controlled in actual operation under the combined action of the walking mechanism 2, the slewing mechanism 3, the boom 4 and the third telescopic drive mechanism 5 so as to adapt to the trimming of the slope surface under different working conditions.

Finally, it should be noted that the above embodiments are only used to illustrate the technical solutions of the present application, but not to limit them. The scope of protection is defined by the appended claims.

## Claims

1. A slope trimming attachment, comprising: a base (11), a first cutting device (12), a leveling mechanism (13), and a turning mechanism (14);
wherein the first cutting device (12) and the leveling mechanism (13) are arranged on the turning mechanism (14);
the turning mechanism (14) is rotatably arranged on the base (11), and the turning mechanism (14) is configured to be able to adjust an angle of a cutting surface of the first cutting device (12) relative to the slope surface and an angle of a leveling surface of the leveling mechanism relative (13) to the slope surface through rotation, the turning mechanism (14) is arranged on at least one of two ends of the base in a first direction; the turning mechanism (14) is rotatable relative to the base (11) along an axis in a second direction; wherein the first direction is along a length direction of the base (11), and the second direction is along a width direction of the base (11);
the turning mechanism (14) comprises a turning plate assembly (141) and a drive assembly (142);
the turning plate assembly (141) comprises a turning plate (401) and a connecting plate (402); and
one end of the connecting plate (402) is rotatably connected to the base (11), and the other end of the connecting plate (402) is rotatably connected to one end of the turning plate (141); the first cutting device (12) and the leveling mechanism (13) are installed on the turning plate (401); the drive assembly (142) is connected between the base (11) and the turning plate (401);
wherein the drive assembly (142) is configured to adjust an angular position of the connecting plate (402) relative to the base and an angular position of the turning plate (401) relative to the connecting plate (402).

2. The slope trimming attachment according to claim 1, wherein the first cutting device (12) and the leveling mechanism (13) are detachably connected to the turning mechanism (14) respectively, and the cutting surface of the first cutting device (12) and the leveling surface of the leveling mechanism (13) have the same orientation;
or, the first cutting device (12) and the leveling mechanism (13) are adjustably arranged on the turning mechanism (14) respectively, and an inclined angle of at least one of the cutting surface of the first cutting device (12) and the leveling surface of the leveling mechanism (13) relative to the turning mechanism (14) is adjustable.

3. The slope trimming attachment according to claim 1, wherein the first cutting device (12) comprises a first blade (121) arranged on at least one of two ends of the turning mechanism (14) in the second direction.

4. The slope trimming attachment according to claim 3, wherein the drive assembly comprises a first telescopic drive mechanism (411) and a second telescopic drive mechanism (412);
one end of the first telescopic drive mechanism (411) is rotatably connected to a first position of the base (11), one end of the second telescopic drive mechanism (412) is rotatably connected to a second position of the base (11), and the other end of the first telescopic drive mechanism (411) is rotatably connected to a third position of the turning plate (401), and the other end of the second telescopic drive mechanism (411) is rotatably connected to a fourth position of the turning plate (401);
wherein the first position is higher than the second position, and the third position is farther from the connecting plate (402) than the fourth position.

5. The slope trimming attachment according to any one of claims 1-4, wherein
the base comprises a bottom plate (111) and a connecting portion (110);
the turning mechanism (14) is rotatably arranged on the bottom plate (111); the connecting portion (110) is installed on the bottom plate (111), and the connecting portion (110) is used to connect to a working machine body.

6. The slope trimming attachment according to claim 5, wherein two ends of the base (11) in the first direction are respectively provided with the turning mechanism (14), and the connecting portion (110) is arranged in the middle of the base (11);
and/or, the connecting portion (110) is provided with a first hinge point and a second hinge point, and the first hinge point and the second hinge point are arranged at intervals along the second direction.

7. The slope trimming attachment according to claim 5, wherein the base further comprises a support base (112) installed on the bottom plate (111);
the support base (112) is configured to install a drive assembly (142) which drives the turning mechanism (14) to rotate.

8. The slope trimming attachment according to any one of claims 1-4, wherein the leveling mechanism (13) comprises a vibration mechanism (130) and a tamping plate (131);
an output end of the vibration mechanism (130) is connected to a first surface of the tamping plate (131) away from the slope surface, and a second surface of the tamper plate (131) close to the slope surface is the leveling surface; the output end of the vibration mechanism (130) is configured to vibrate back and forth along a direction perpendicular to the first surface.

9. The slope trimming attachment according to any one of claims 1-4, further comprising: a second cutting device (15);
wherein the second cutting device (15) comprises a second blade (151), the second blade is arranged on at least one of two ends of the base (11) in the second direction.

10. A working machine, comprising
a work machine body, and
the slope trimming attachment (1) according to any one of claims 1-9,
wherein the slope trimming attachment is installed on the working machine body.

11. The working machine according to claim 10, wherein the working machine body comprises a boom (4) and a third telescopic drive mechanism (5);
an execution end of the boom (4) is hinged with a first hinge point arranged on the base (11) of the slope trimming attachment (1); one end of the third telescopic drive mechanism (5) is hinged with the boom (4), and the other end of the third telescopic drive mechanism (5) is hinged with a second hinge point arranged on the base (11) of the slope trimming attachment (1).

## Patentansprüche

1. Ein Böschungstrimmungsaufsatz, der Folgendes beinhaltet: eine Grundplatte (11), eine erste Schneidevorrichtung (12), einen Nivelliermechanismus (13) und einen Drehmechanismus (14);
wobei die erste Schneidevorrichtung (12) und der Nivelliermechanismus (13) auf dem Drehmechanismus (14) angeordnet sind;
der Drehmechanismus (14) rotierbar auf der Grundplatte (11) angeordnet ist und der Drehmechanismus (14) so konfiguriert ist, dass er einen Winkel einer Schneidefläche der ersten Schneidevorrichtung (12) relativ zu der Böschungsfläche und einen Winkel einer Nivellierfläche des Nivelliermechanismus (13) relativ zu der Böschungsfläche durch Rotation einstellen kann, der Drehmechanismus (14) an mindestens einem von zwei Enden der Grundplatte in einer ersten Richtung angeordnet ist; der Drehmechanismus (14) relativ zu der Grundplatte (11) entlang einer Achse in einer zweiten Richtung rotierbar ist; wobei die erste Richtung entlang einer Längsrichtung der Grundplatte (11) liegt und die zweite Richtung entlang einer Breitenrichtung der Grundplatte (11) liegt;
der Drehmechanismus (14) eine Drehplattenanordnung (141) und eine Antriebsanordnung (142) beinhaltet;
die Drehplattenanordnung (141) eine Drehplatte (401) und eine Verbindungsplatte (402) beinhaltet; und
ein Ende der Verbindungsplatte (402) mit der Grundplatte (11) rotierbar verbunden ist und das andere Ende der Verbindungsplatte (402) mit einem Ende der Drehplatte (141) rotierbar verbunden ist; die erste Schneidevorrichtung (12) und der Nivelliermechanismus (13) auf der Drehplatte (401) montiert sind; die Antriebsanordnung (142) zwischen der Grundplatte (11) und der Drehplatte (401) verbunden ist;
wobei die Antriebsanordnung (142) konfiguriert ist, um eine Winkelposition der Verbindungsplatte (402) relativ zur Grundplatte und eine Winkelposition der Drehplatte (401) relativ zur Verbindungsplatte (402) einzustellen.

2. Böschungstrimmungsaufsatz gemäß Anspruch 1, wobei die erste Schneidevorrichtung (12) und der Nivelliermechanismus (13) jeweils lösbar mit dem Drehmechanismus (14) verbunden sind und die Schneidefläche der ersten Schneidevorrichtung (12) und die Nivellierfläche des Nivelliermechanismus (13) die gleiche Ausrichtung aufweisen; oder die erste Schneidevorrichtung (12) und der Nivelliermechanismus (13) jeweils einstellbar auf dem Drehmechanismus (14) angeordnet ist und ein geneigter Winkel von mindestens einer der Schneidefläche der ersten Schneidevorrichtung (12) und der Nivellierfläche des Nivelliermechanismus (13) relativ zum Drehmechanismus (14) einstellbar ist.

3. Böschungstrimmungsaufsatz gemäß Anspruch 1, wobei die erste Schneidevorrichtung (12) eine erste Klinge (121) beinhaltet, die an mindestens einem von zwei Enden des Drehmechanismus (14) in der zweiten Richtung angeordnet ist.

4. Böschungstrimmungsaufsatz gemäß Anspruch 3, wobei die Antriebsanordnung einen ersten ausziehbaren Antriebsmechanismus (411) und einen zweiten ausziehbaren Antriebsmechanismus (412) beinhaltet;
ein Ende des ersten ausziehbaren Antriebsmechanismus (411) mit einer ersten Position der Grundplatte (11) rotierbar verbunden ist, ein Ende des zweiten ausziehbaren Antriebsmechanismus (412) mit einer zweiten Position der Grundplatte (11) rotierbar verbunden ist und das andere Ende des ersten ausziehbaren Antriebsmechanismus (411) mit einer dritten Position der Drehplatte (401) rotierbar verbunden ist und das andere Ende des zweiten ausziehbaren Antriebsmechanismus (411) mit einer vierten Position der Drehplatte (401) rotierbar verbunden ist;
wobei die erste Position höher als die zweite Position ist und die dritte Position weiter von der Verbindungsplatte (402) entfernt als die vierte Position ist.

5. Böschungstrimmungsaufsatz gemäß einem der Ansprüche 1-4, wobei die Grundplatte eine Bodenplatte (111) und einen Verbindungsabschnitt (110) beinhaltet; der Drehmechanismus (14) auf der Bodenplatte (111) rotierbar angeordnet ist; der Verbindungsabschnitt (110) auf der Bodenplatte (111) montiert ist und der Verbindungsabschnitt (110) zur Verbindung mit einem Arbeitsmaschinenkörper verwendet wird.

6. Böschungstrimmungsaufsatz gemäß Anspruch 5, wobei zwei Enden der Grundplatte (11) in der ersten Richtung jeweils mit dem Drehmechanismus (14) bereitgestellt sind und der Verbindungsabschnitt (110) in der Mitte der Grundplatte (11) angeordnet ist; und/oder der Verbindungsabschnitt (110) mit einem ersten Gelenkpunkt und einem zweiten Gelenkpunkt bereitgestellt ist und der erste Gelenkpunkt und der zweite Gelenkpunkt in Abständen entlang der zweiten Richtung angeordnet sind.

7. Böschungstrimmungsaufsatz gemäß Anspruch 5, wobei die Grundplatte ferner eine Stützgrundplatte (112), die auf der Bodenplatte (111) montiert ist, beinhaltet;
die Stützgrundplatte (112) zum Montieren einer Antriebsanordnung (142) konfiguriert ist, die den Drehmechanismus (14) zur Rotation antreibt.

8. Böschungstrimmungsaufsatz gemäß einem der Ansprüche 1-4, wobei der Nivelliermechanismus (13) einen Vibrationsmechanismus (130) und eine Stopfplatte (131) beinhaltet;
ein Ausgangsende des Vibrationsmechanismus (130) mit einer ersten, von der Böschungsfläche entfernten Fläche der Stopfplatte (131) verbunden ist und eine zweite, der Böschungsfläche nahe gelegene Fläche der Stopfplatte (131) die Nivellierfläche ist;
das Ausgangsende des Vibrationsmechanismus (130) so konfiguriert ist, dass es entlang einer zur ersten Fläche senkrechten Richtung hin und her schwingt.

9. Böschungstrimmungsaufsatz gemäß einem der Ansprüche 1-4, der ferner Folgendes beinhaltet: eine zweite Schneidevorrichtung (15);
wobei die zweite Schneidevorrichtung (15) eine zweite Klinge (151) beinhaltet, wobei die zweite Klinge an mindestens einem von zwei Enden der Grundplatte (11) in der zweiten Richtung angeordnet ist.

10. Eine Arbeitsmaschine, die Folgendes beinhaltet:
einen Arbeitsmaschinenkörper, und
den Böschungstrimmungsaufsatz (1) gemäß einem der Ansprüche 1-9,
wobei der Böschungstrimmungsaufsatz auf dem Arbeitsmaschinenkörper montiert ist.

11. Arbeitsmaschine gemäß Anspruch 10, wobei der Arbeitsmaschinenkörper einen Ausleger (4) und einen dritten ausziehbaren Antriebsmechanismus (5) beinhaltet;
ein Ausführungsende des Auslegers (4) mit einem ersten Gelenkpunkt, der auf der Grundplatte (11) des Böschungstrimmungsaufsatzes (1) angeordnet ist, gelenkig verbunden ist; ein Ende des dritten ausziehbaren Antriebsmechanismus (5) mit dem Ausleger (4) gelenkig verbunden ist und das andere Ende des dritten ausziehbaren Antriebsmechanismus (5) mit einem zweiten Gelenkpunkt, der auf der Grundplatte (11) des Böschungstrimmungsaufsatzes (1) angeordnet ist, gelenkig verbunden ist.

## Revendications

1. Un accessoire de rectification de talus, comprenant : une base (11), un premier dispositif de coupe (12), un mécanisme de nivelage (13), et un mécanisme tournant (14) ;
dans lequel le premier dispositif de coupe (12) et le mécanisme de nivelage (13) sont agencés sur le mécanisme tournant (14) ;
le mécanisme tournant (14) est agencé de manière rotative sur la base (11), et le mécanisme tournant (14) est configuré pour pouvoir ajuster un angle d'une surface de coupe du premier dispositif de coupe (12) par rapport à la surface de talus et un angle d'une surface de nivelage du mécanisme de nivelage (13) par rapport à la surface de talus par rotation, le mécanisme tournant (14) est agencé sur au moins une extrémité parmi deux extrémités de la base dans une première direction ; le mécanisme tournant (14) est rotatif par rapport à la base (11) autour d'un axe s'étendant dans une deuxième direction ; la première direction étant suivant une direction de longueur de la base (11), et la deuxième direction étant suivant une direction de largeur de la base (11) ;
le mécanisme tournant (14) comprend un ensemble plaque tournante (141) et un ensemble d'entraînement (142) ;
l'ensemble plaque tournante (141) comprend une plaque tournante (401) et une plaque de liaison (402) ; et
une extrémité de la plaque de liaison (402) est reliée de manière rotative à la base (11), et l'autre extrémité de la plaque de liaison (402) est reliée de manière rotative à une extrémité de la plaque tournante (141) ; le premier dispositif de coupe (12) et le mécanisme de nivelage (13) sont installés sur la plaque tournante (401) ; l'ensemble d'entraînement (142) est relié entre la base (11) et la plaque tournante (401) ;
dans lequel l'ensemble d'entraînement (142) est configuré pour ajuster une position angulaire de la plaque de liaison (402) par rapport à la base et une position angulaire de la plaque tournante (401) par rapport à la plaque de liaison (402).

2. L'accessoire de rectification de talus selon la revendication 1, dans lequel le premier dispositif de coupe (12) et le mécanisme de nivelage (13) sont reliés de manière amovible au mécanisme tournant (14) respectivement, et la surface de coupe du premier dispositif de coupe (12) et la surface de nivelage du mécanisme de nivelage (13) ont la même orientation ;
ou, le premier dispositif de coupe (12) et le mécanisme de nivelage (13) sont agencés de manière ajustable sur le mécanisme tournant (14) respectivement, et un angle d'inclinaison d'au moins une surface parmi la surface de coupe du premier dispositif de coupe (12) et la surface de nivelage du mécanisme de nivelage (13) par rapport au mécanisme tournant (14) est ajustable.

3. L'accessoire de rectification de talus selon la revendication 1, dans lequel le premier dispositif de coupe (12) comprend une première lame (121) agencée sur au moins une extrémité parmi deux extrémités du mécanisme tournant (14) dans la deuxième direction.

4. L'accessoire de rectification de talus selon la revendication 3, dans lequel l'ensemble d'entraînement comprend un premier mécanisme d'entraînement télescopique (411) et un deuxième mécanisme d'entraînement télescopique (412) ;
une extrémité du premier mécanisme d'entraînement télescopique (411) est reliée de manière rotative à une première position de la base (11), une extrémité du deuxième mécanisme d'entraînement télescopique (412) est reliée de manière rotative à une deuxième position de la base (11), et l'autre extrémité du premier mécanisme d'entraînement télescopique (411) est reliée de manière rotative à une troisième position de la plaque tournante (401), et l'autre extrémité du deuxième mécanisme d'entraînement télescopique (411) est reliée de manière rotative à une quatrième position de la plaque tournante (401) ;
dans lequel la première position est plus haute que la deuxième position, et la troisième position est plus éloignée de la plaque de liaison (402) que la quatrième position.

5. L'accessoire de rectification de talus selon l'une quelconque des revendications 1 à 4, dans lequel la base comprend une plaque inférieure (111) et une portion de liaison (110) ; le mécanisme tournant (14) est agencé de manière rotative sur la plaque inférieure (111) ; la portion de liaison (110) est installée sur la plaque inférieure (111), et la portion de liaison (110) est utilisée pour la liaison à un corps d'engin de chantier.

6. L'accessoire de rectification de talus selon la revendication 5, dans lequel deux extrémités de la base (11) dans la première direction sont respectivement pourvues du mécanisme tournant (14), et la portion de liaison (110) est agencée au milieu de la base (11) ;
et/ou, la portion de liaison (110) est pourvue d'un premier point d'articulation et d'un deuxième point d'articulation, et le premier point d'articulation et le deuxième point d'articulation sont agencés à intervalles suivant la deuxième direction.

7. L'accessoire de rectification de talus selon la revendication 5, dans lequel la base comprend en outre une base de support (112) installée sur la plaque inférieure (111) ; la base de support (112) est configurée pour installer un ensemble d'entraînement (142) qui entraîne le mécanisme tournant (14) en rotation.

8. L'accessoire de rectification de talus selon l'une quelconque des revendications 1 à 4, dans lequel le mécanisme de nivelage (13) comprend un mécanisme de vibration (130) et une plaque de damage (131) ;
une extrémité de sortie du mécanisme de vibration (130) est reliée à une première surface de la plaque de damage (131) distante de la surface de talus, et une deuxième surface de la plaque de damage (131) proche de la surface de talus est la surface de nivelage ; l'extrémité de sortie du mécanisme de vibration (130) est configurée pour vibrer en va-et-vient suivant une direction perpendiculaire à la première surface.

9. L'accessoire de rectification de talus selon l'une quelconque des revendications 1 à 4, comprenant en outre : un deuxième dispositif de coupe (15) ;
dans lequel le deuxième dispositif de coupe (15) comprend une deuxième lame (151), la deuxième lame est agencée sur au moins une extrémité parmi deux extrémités de la base (11) dans la deuxième direction.

10. Un engin de chantier, comprenant
un corps d'engin de chantier, et
l'accessoire de rectification de talus (1) selon l'une quelconque des revendications 1 à 9,
dans lequel l'accessoire de rectification de talus est installé sur le corps d'engin de chantier.

11. L'engin de chantier selon la revendication 10, dans lequel le corps d'engin de chantier comprend une flèche (4) et un troisième mécanisme d'entraînement télescopique (5) ; une extrémité d'exécution de la flèche (4) est articulée à un premier point d'articulation agencé sur la base (11) de l'accessoire de rectification de talus (1) ; une extrémité du troisième mécanisme d'entraînement télescopique (5) est articulée à la flèche (4), et l'autre extrémité du troisième mécanisme d'entraînement télescopique (5) est articulée à un deuxième point d'articulation agencé sur la base (11) de l'accessoire de rectification de talus (1).
